# EUROPEAN PATENT APPLICATION

(11) **EP 4 193 843 A1**
(43) Date of publication of application: **14.06.2023**
(21) Application number: 21213213.8
(22) Date of filing: 08.12.2021
(51) Int. Cl.: A23J 3/22, A23L 29/256, A23P 30/10, A23J 3/26

(54) **VEGAN SEAFOOD SUBSTITUTE PRODUCT**

(71) Applicant: BK Giulini GmbH, 68526 Ladenburg (DE)
(72) Inventor: SCHNEIDER, Wolfgang, 68239 Mannheim (DE); GERDES, Annika, 69121 Heidelberg (DE); GRABER, Alexander, 68169 Mannheim (DE); SPORKA, Radovan, 69117 Heidelberg (DE); GALILEY, Megan, Hazelwood, 63042 (US); HIDALGO, Waleska, St. Louis, 63117 (US)
(74) Representative: Hoyng Rokh Monegier B.V.

(57) **Abstract**

The present invention relates to a seafood substitute product which is a solidified mass comprising (i) a protein material derived from plants in an amount from about 3 wt% to about 15 wt%; (ii) an amount of alginate from about 0.5 wt% to about 2.8 wt%; optionally other hydrocolloid thickeners; (iii) an amount of vegetable oil from about 4 wt% to about 20 wt%; (iv) an amount of water of at least about 60 wt%. and (v) an amount of calcium ions between 0.1 and 0.7 wt%, and to a process for making such seafood substitute. The seafood substitute substantially resembles the shape of scallop, shrimp, clam or calamari, as used by consumers.

## Description

### FIELD OF THE INVENTION

The invention relates to plant-based imitations of seafood, such as scallops, shrimp, clams or calamari, with texture and appearance, similar to that of actual seafood products.

### BACKGROUND

Increasing awareness of the benefits (health, sustainability, and animal welfare) of a plant-based diet and growing demand for respective food products, has led to development of plant-based alternatives across various categories. Whereas in the meat- and dairy-free market space a large array of different product offerings already exists, seafood alternatives are not that common.

Consumer awareness on environmental impact of overfishing and seafood farming, as well as health issues, such as seafood allergies, heavy metal contaminants, seafood-borne hazards, has led to an increasing demand for vegan seafood alternatives. The development of such products that mimic characteristics of farmed or wild-caught seafood, especially taste and texture, is crucial for consumer acceptance, as these attributes are key drivers behind purchase decisions. However, existing seafood imitation products are lacking in their ability to create texture, mouthfeel, and appearance of conventional seafood.

The prior art contains examples of shellfish and seafood analogue products that are produced by a combination of protein, hydrocolloids, and alginate to form gelled products in the presence of calcium salts. Examples include those described in WO 2020236632 describing compositions of 3 - 3.5 wt% of alginate, 2.4% to 2.8% of potato starch, 5.5% to 6.8% of protein isolate, 2.6% to 3.8% of a calcium salt, 60% to 71% of water, and unspecified amounts of a sequestrant, 13-20 wt% konnyaku, and/or liquid filled calcium alginate beads. US 20180084815 describes a seafood substitute, however, the specific compositions cannot be derived from most examples. Example 1 uses about 3 wt% gellan gum, about 7 wt% protein and about 88% of water. Both references are directed to mimicking shrimp.

WO2020/236632 describes an actual texture analysis, which suggests that the properties of the product of the 5^{th} example are close to these of shrimp. However, the formulation comprises relatively large amounts of carbohydrates like konnyaku gel, which needs to be pre-processed with alkali, that forms a gel on its own with a firm texture and shows visible gel inclusions when added to the basic mixture under low shear. Thereby, such a formulation is not optimal in industrial processing, nor in use.

One of the challenges in this industry is to provide compositions that are closely resembling true seafood, while being able to be produced on an industrial scale, requiring suitable viscosity and formability. The texture of seafood is fibrous in nature and a challenge for industry is to duplicate this texture using ingredients that often require setting, curing or hardening. One of the issues is in particular hardening, that can only be controlled with difficulty and in many cases results in nonuniform hardening, which is badly suited for processes in the food industry.

Another challenge is to mimic seafood which is softer than for example shrimp, like scallop.

The invention disclosed herein provides compositions and methods for manufacture especially suitable for production of vegan seafood imitation products mimicking texture and mouthfeel of natural seafood overcoming deficiencies in the art.

### SUMMARY OF THE INVENTION

The present inventors have designed a composition and a process for the manufacture of purely plant-based seafood imitations, specifically imitations of the meat of scallops, shrimp, clams, and calamari, that are superior to those previously disclosed.

The invention provides for a seafood substitute product which is a solidified mass comprising
a. a protein derived from plants in an amount from about 3 wt% to about 15 wt%
b. an amount of alginate from about 0.5 wt% to about 2.8 wt%
c. an amount of vegetable oil from about 4 wt% to about 20 wt%
d. an amount of water of at least 60 wt%
e. an amount of calcium ions from about 0.1 to about 0.7 wt%

Preferably, the seafood substitute product substantially resembles the shape of a scallop, shrimp, clam, or calamari as used for consumption.

Preferably, in the seafood substitute product, the ratio of protein to alginate is 20-3 to 1, more preferably 15-4 to 1.

Preferably, the seafood substitute product according the invention and related to the imitation of the genuine seafood products, has a firmness of
a. about 600-900 g for scallop substitute measured as 2 cm high and 2.5-5.0 cm diameter solidified mass
b. about 1500-2500 g for shrimp substitute measured as a string of 5-10cm length with a diameter of 1 cm solidified mass; about 700-1500 g for small popcorn shrimp measured as a string of 1-5 cm length with a diameter of 1.5 cm solidified mass;
c. about 800-1800 g for calamari substitute measured as a strip of 10-12 cm length with a diameter of 2 cm solidified mass
d. about 800-1800 g for clam substitute measured as a string of 10 cm length and 1 cm diameter solidified mass
as measured with a Texture Analyzer.

It may be noted that existing solutions for other vegan substitute products, like for meat or chicken, cannot be directly transferred to seafood imitations as their textural properties are often too firm to truly resemble the mouthfeel of natural seafood as well as specific shapes of seafood cannot be obtained. Furthermore, combining individual fiber structures through addition of appropriate hydrocolloids, like e.g. methyl cellulose, to form a binding structure, which is commonly applied for creation of vegan meatballs, fishfingers or crab cakes, is not suitable for creation of a homogeneous structure mimicking that of scallop or clams.

A further challenge is, that vegetable proteins have intrinsically a different structure than meat or fish fibers, such that vegan products have a tendency to become too firm.

Besides conventional sensory analysis by a trained panel, characteristics of rigidity and bite sensation can also be measured with common devices of textural analysis and rheology, which allows comparing to characteristics with genuine seafood products.

Through a combination of specific amounts and specific ratios of alginate to protein, moisture content of the finished products can be managed, and applying a suitable process and shaping technology, it has been found, that textural properties of seafood can be simulated in a way to directly correspond to values measured for natural seafood products.

The process according to the present invention entails a method for providing a seafood substitute product, the method comprising:
a) mixing of components comprising:
   i) an amount of protein derived from plants from about 3 wt% to about 15 wt%
   ii) an amount of alginate from about 0.5 wt% to about 2.8 wt%
   iii) an amount of vegetable oil from about 4 wt% to about 20 wt%
   iv) an amount of water of at least 60 wt%.
b) optionally heating, the mixture
c) shaping the mixture into a shape and allowing the shaped mass to solidify with calcium ions.

Preferably, solidifying the mass is achieved by application of calcium ions using internal setting, diffusion setting or combined internal and diffusion setting that may take place at the same time, or subsequently in either order.

With internal setting, softer products are obtained, which may better resemble certain types of seafood like scallops or clam. With diffusion setting, harder products are obtained, which may better resemble certain types of seafood like shrimps or calamari. The slower the gelation rate the harder the forming structure.

Shaping can be done in a mold, casing, by filling and forming device or the like.

### SHORT DESCRIPTION OF THE FIGURES

**Fig. 1****:** Calculation of a possible prediction of strength using Minitab based on the results of a Design of Experiments (Samples: Bars, 2 cm, 72°C - probe: cylinder above, sphere below); A = % alginate, PPI = % pea protein isolate; value ranges indicate hardness F [g].
**Fig. 2****:** Overview of the hardness [g] measurement with the TPA of the scallop samples and selected emulsions (diffusion and internal setting) - comparison as egg-box-model;
   DS = Deep Sea Scallop, JS = Japanese Scallop; CaL = internal setting with Calcium lactate, D = diffusion setting.
**Fig** 3: TPA analysis of scallop and imitations thereof, with 3 parameters (F= Hardness [g], C = Cohesiveness, CW = chewiness [g]); DS = Deep Sea Scallop, JS = Japanese Scallop, CaL = internal setting with Calcium lactate, D = diffusion setting.
**Fig** 4: Overview of the hardness [g] measurement with the TPA of the shrimp samples and selected emulsions (diffusion and internal setting) - comparison as egg-box-model;
   S = Shrimp, SH = Shrimp head, ST = Shrimp tail, CaL = internal setting with Calcium lactate, D = diffusion setting.
**Fig** 5: TPA analysis of shrimp and imitations thereof with 3 parameters (F= Hardness [g], C = Cohesiveness, CW = chewiness[g]); SH = Shrimp head, ST = Shrimp tail, D = diffusion setting, CaL = internal setting with Calcium lactate.
**Fig** 6: TPA analysis of scallop type product hardened with different concentrations of calcium carbonate, GdL and TSPP; (F= Hardness [g], C = Cohesiveness, CW = chewiness[g]).
**Fig. 7****:** TPA analysis of plant-based substitutes hardened with the CaL-system in an emulsion with 12% PPI, 1 % alginate (STD), without and with 1% and 2% xanthan gum as additional thickener (filled at different times after emulsification); (F= Hardness [g], C = Cohesiveness, CW = chewiness[g]); STD = standard, X = xanthan gum, f.l. 1 h= filled later after 1h; CaL 12/1 d=2.5cm = previous measurement.
**Fig. 8****:** TPA analysis of plant-based substitutes hardened with the CaL-system in an emulsion with 12% PPI, 1-2 % alginate, and a variety of additional thickeners - Modified starch (M), Methyl Cellulose (MC) or Xanthan gum (X); (F= Hardness [g], C = Cohesiveness, CW = chewiness[g]) ; CaL 12/1 d=2.5cm = previous measurement, A = alginate.
**Fig. 9****:** TPA analysis of plant-based substitutes hardened with the GdL-/ TSPP-system with 12% PPI, 1-2 % alginate and a variety of thickeners (M: modified starch, X: Xanthan gum); (F= Hardness [g], C = Cohesiveness, CW = chewiness[g]); GdL STD p.m. = previous measurement with 1% Ca-carbonate, 3.5 % GdL, 0.25 % TSPP, A = alginate.
**Fig. 10****:** TPA analysis of different systems with modified starch to imitate shrimps, variation in the diffusion time, indicated in the figure, heated; (F= Hardness [g], C = Cohesiveness, CW = chewiness[g]); SH = Shrimp head; ST = Shrimp tail, CaL = internal setting with Calcium lactate, GdL = internal setting with CaCO3, GdL and TSPP, D = diffusion setting.
**Fig. 11****:** Viscosity Profile by time for selected emulsions (composition and curing point 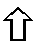 marked in the graph); STD (CaL 12/1) has been measured twice for 5 min., CaL = internal setting with Calcium lactate, GdL = internal setting with CaCO3, GdL and TSPP; A = alginate, M = Modified starch; viscosity = η (CP), Time =T (min).
**Fig. 12****:** Phase angle measurements of the emulsions tested with the rheometer; 12% Protein for all batches; A= alginate, M = modified starch;
   12.1. above GdL-based system and diffusion setting (GdL 2A1M emulsion produced with 0.35 % TSPP - deviating from the standard with 0.25% TSPP);
   12.2 below coated Calcium lactate-system;
   starting point: 5 min after stirring. (Time = t [s]; Phase angle PA [°]

### DETAILED DESCRIPION OF THE INVENTION

A vegan "seafood imitation" or "seafood analogue" or "seafood substitute" is a food product imitating the appearance, taste and texture of a natural seafood comprising a protein source from non-animal origin which is usually plant-based, an alginate, a calcium salt, oil, water, and optionally further edible components, like other hydrocolloids.

Vegan food does not comprise any animal products, but only plant-based materials, that include vegetables, fungi, bacteria, algae and other non-animal organisms that can provide proteins, fats or carbohydrates.

Seafood in the present invention is defined as fish, shellfish, esp. scallops, as well as crustaceans (shrimps) and molluscs. Fish can have the form of fish fingers, fish sticks and the like.

### Product

The seafood substitute product according to the invention preferably is shaped such that the product substantially resembles the shape of seafood, like scallop, shrimp, clam, or calamari, as used by consumers. However, other shapes are equally possible, like formed fish fingers.

It has been found that samples of scallop, clam, calamari and shrimp imitations with the present composition can exhibit the same values of hardness and succulence as those of natural seafood.

Furthermore, it has been noted that taste, especially bitterness has been improved, because less alginate and calcium ions needed to be used than in the prior art. Further improvements have been found when applying the present composition together with a coated calcium salt or calcium in another retarded form for internal setting.

In a comparative sensory evaluation, it has been observed that vegan scallop and shrimp imitations were described by similar intensities in most prescribed textural attributes compared to the respective natural seafood product.

The seafood substitute product as described herein preferably has a ratio of protein to alginate of about 20-3 to 1, preferably of about 15-4 to 1.

The seafood substitute product according to the invention preferably comprises one or more of items (a) through (f):
a) an amount of protein derived from plants from about 4 wt% to about 13 wt%, more preferably from about 6 wt% to about 12 wt%;
b) an amount of alginate from about 1 wt% to about 2.4 wt%;
c) an amount of vegetable oil from about 4 wt% to about 15 wt%
d) an amount of water of at least about 65 wt%, more preferably about 70 wt% or more;
e) an amount of calcium ions between about 0.2 wt% and 0.6 wt%
f) optionally an amount of neutral polysaccharide of about 10 wt% or less, more preferably of about 0.5 wt% to about 5 wt%.

The seafood substitute product of the invention preferably comprises protein selected from vegan sources, such as including vegetable, cereals, fungi and the like. Preferred protein source include one or more from the group of pulses, cereals, oil seeds, plant leaves, and include for example from one or more of pea protein, faba bean protein, soy protein, lentil protein, lupine protein, chickpea protein, mung bean protein, potato protein, rice protein, wheat protein, sunflower protein, hemp protein, rapeseed / canola protein, proteins of spinach leaves, water lentil leaves, alfalfa leaves, sugar beet leaves, and algal protein and microbial protein, such as bacterial protein, fungal protein, yeast protein, and combinations thereof. The protein preferably is protein from pulses such as pea protein, faba bean protein or mung bean protein, or soy protein; and most preferably is pea protein as present in pea protein isolate or pea protein concentrate.

In a further embodiment of the present invention, the seafood imitation contains an edible oil in a concentration of 4-20 wt%, more preferably 4-15 wt%. The oil generally is a triglyceride oil having fatty acid chains of between 12-24 carbon atoms. Generally, at least 90% of the fatty acid chains have 14-20 carbon atoms. Suitable oils have a melting point of between -25 °C and 35 °C. Oils with higher degree of unsaturation have lower melting points, whereas for example cocoa butter melts at 34 °C. It is preferred to use oils with a melting point of about 5 °C or lower, although this may also depend on the specific recipe.

Suitable vegetable oils include corn, palm, rapeseed, canola, sunflower, soybean or coconut oil, and mixtures thereof. In a preferred embodiment, the oil comprises canola oil, rapeseed or sunflower oil.

The composition to produce a seafood imitation product may further comprise additional ingredients, like flavors, colorings, plant fibers and hydrocolloids, like e.g. citrus fiber, methyl cellulose, xanthan gum, pectin or native or modified starch.

In a preferred embodiment, the seafood substitute product further comprises a polysaccharide as hydrocolloid, preferably starch, modified starch, methyl cellulose, xanthan gum.

Preferably, the seafood substitute product of the invention further comprises at least one of flavoring and coloring, to mimic natural seafood.

The seafood substitute product according to the invention preferably resembles scallop in shape, taste and hardness.

In one preferred embodiment of the invention, the seafood imitation product is a scallop. The emulsion used for production of the scallop imitation preferably comprises 4-15 wt% protein, 0.5-2 wt % alginate and 7.5-15 wt% oil.

In another preferred embodiment of the invention, the seafood imitation product is a shrimp. The emulsion used for production of the shrimp imitation preferably comprises 3-12 wt% protein, 1-2.5 wt % alginate and 7.5-15 wt% oil.

In further embodiments, compositions of emulsions for a clam substitute or a calamari substitute (or the like, like octopus) resemble the amounts described for the scallop or shrimp substitutes.

In all imitation emulsions, a hydrocolloid can be present for increasing the initial viscosity to improve industrial processing, as described elsewhere in more detail.

The composition according to the present invention comprises alginate. Alginate may be derived from brown algae or fermentation and may initially be present in the form of sodium alginate or potassium alginate.

The composition according to the present invention furthermore comprises a bivalent cation, preferably calcium ions.

The amount of calcium ions in the seafood imitation products preferably is between 0.2-to 0.6%.

The texture of seafood imitation and natural seafood products can be determined with a Texture Analyzer, like for example using a TA.XT.plus by Stable Micro Systems, applying different measuring geometries, like a cylindrical indentor (25 mm cylinder diameter Perspex, 45 mm length), a sphere (20 mm sphere stainless) or a blade (knife with 45° chisel end), to simulate penetration, compression, cutting/shearing, extrusion and adhesion. In most cases the TPA-analysis was used, however, all applied Texture Analyzer-methods ensure comparability with genuine seafood within a narrow range (if the same setup is performed).

### Processing

The invention furthermore relates to a process for preparation of a seafood imitation product comprising the steps of: mixing (and hydrating) of protein, alginate, fiber, optionally other hydrocolloid thickeners, oil and water to create a malleable mass, optionally heating, shaping and subjecting the shaped mass to solidifying with calcium ions.

Solidifying with calcium ions can be achieved by so called 'internal' hardening, and/or 'diffusion hardening'

The terms "internal hardening" and "internal setting" refer to the hardening resulting from the retarded calcium salt contained in the emulsion.

The terms "diffusion process", "diffusion hardening" and "diffusion setting" refer to the hardening of the particles formed from the emulsion by the contact with the aqueous solution of the calcium salt.

Such hardening is also called 'fiber formation', as a fibrous protein-alginate-mass is formed during such hardening. Generally, hardening, fiber formation and the like is referred to as solidification, and the resulting product a solidified mass.

The described composition is suitable for employing technologies of diffusion hardening, when emulsified protein material in the presence of a water-soluble gelling agent, which is capable of being gelled by calcium ions, typically a polysaccharide bearing carboxyl groups, such as alginate or pectin, is brought in contact with an aqueous solution of a bivalent metal salt, such as a water-soluble calcium salt, e.g. by curing the particles in the aqueous solution of a bivalent metal salt. Bivalent metal salts, in particular calcium salts, diffuse into the mass, causing a crosslinking of the gelling agent and a precipitation/gelling of the protein/gelling agent mixture resulting in a hardening of the mass, which could be shape-controlled by filling the mass in permeable casings or molds or by another shaping device.

Furthermore, the composition of the present invention might also be employed applying the technology of internal setting, where a calcium salt being present in retarded form which releases its calcium ions to the mass in a delayed manner, is additionally added to the formulation. This technology delivers several advantages like a better controllable, simplified processing requiring reduced production time.

The components are mixed, generally at elevated temperatures of about 72°C or above. However, the emulsion can be prepared at around room temperature (like between 20-30 °C or even lower, e.g. 5-20 °C) as well. This emulsion is a composition that can be shaped in a subsequent step. Shaping can be achieved by extrusion, sheeting, molding, filling in forms, cutting, imprinting or by any other conventional technique for shaping dough.

Heating thereafter is optional to speed up the hardening process by increase of diffusion. A heating step may also be necessary to achieve release of a coated calcium source. Further setting time for gel formation may be required. Heating is not required, if an otherwise delayed internal setting calcium source is used, like for example the combination of calcium carbonate, glucono-δ-lactone (GdL) and tetrasodium pyrophosphate (TSPP) that provides for a delayed availability of calcium ions, and thereby a delayed hardening, without the necessity to apply heat.

The emulsion is generally prepared by mixing the ingredients of the emulsion in their respective amounts, preferably with mixing and shearing. Usually, the components in form of powders are added to the water in an arbitrary order or as a pre-blend in a suitable mixing device, followed by the addition of oil. In case a coated calcium source is used, this is preferably added to the mix during the last mixing rounds.

Preferably, the components of the emulsion are mixed while applying shear forces. Mixing and shearing can be carried out successively or simultaneously. Shearing results in a homogenization of the component in water such that they are evenly distributed. Suitable apparatus for mixing and shearing include bowl choppers, cutters, such as Stephan cutters, high speed emulsifiers, in particular those based on the rotor-stator principle, colloid mills and combinations thereof with a blender. The thus obtained malleable mass has typically a dough like consistency.

The emulsion is generally prepared at temperatures in the range of 5°C to 95°C, in particular in the range of 5 to 90°C. In other words, mixing and shearing is carried out at these temperature ranges. Typical mixing times are from 2 min to 30 min, preferably from 5 min to 15 min.

When applying a diffusion hardening process, the emulsion is shaped and brought in contact with an aqueous calcium chloride solution comprising 1-5 wt%, preferably 2-4 wt% calcium chloride. Preferably, the shaping is such that the resulting shape (optionally after further shaping steps like cutting / portioning) resembles natural seafood, like scallops, shrimp, clams or calamari in the shape these are used for human consumption. This could be achieved by extrusion, sheeting, or by any other conventional technique for shaping dough.

Numerous devices and methods have been described in the literature for the shaping of meat masses, noodles or dough, for instance fried, flour-based bakery products, e.g. by extruding, flaking, molding with stencils or sheeting, and various machines for this purpose are commercially available. Any of these may be used to shape the emulsion disclosed herein before solidification by treatment with the calcium chloride solution or other calcium ion providing compounds.

Preferably, the source of calcium ions used for solidifying the emulsion will be a calcium source present in the form of calcium chloride, calcium lactate, calcium gluconate, calcium carbonate, calcium hydroxide or the like. The skilled person can with the teaching of the present specification chose a suitable form, depending on the required technique.

The previously described method of internal setting allows for application of various new shaping technologies in the frame of creating seafood imitation products of various type. For creation of round shapes typical for scallops and clams, previously described emulsions may be filled in permeable artificial casings or molds or by another molding device. After hardening through reaction with calcium salts, these strands of gelled material can be sliced in respective portion sizes in original or frozen state. For manufacture of scallops and clams emulsion drops formed by a diaphragm knife, rotating hole plates or nozzles can be exposed to a calcium salt bath for initial gelling on the surface. Emulsion molding e.g. in silicon molds or solid metal forms, is applicable for creating shrimp analogue products in genuine shape. Vegan Surimi, squid rings and calamari strip analogues can be formed by processing thin layers or strings through nozzles or grids and contacting the emulsion with calcium salts to preserve shaping.

By bringing the particles in contact with the aqueous solution of the calcium salts, the calcium ions will crosslink the alginate molecules on the surface of the particles and thus also jellify / harden the particles on its surface. Thereby, a rigid skin on the surface of the particles is formed, which pre-stabilizes the particles for transporting them for further solidifying in a mold or on a tray etc. outside the solution in a dry environment.

Contact time of the emulsion with the aqueous calcium containing solution depends on the technology employed. For internal setting contact times in the range of 2 to 60 minutes, in particular in the range of 2 to 30 minutes, especially in the range of 2 to 15 minutes are preferred. For external hardening, sufficient diffusion time can be determined by the skilled person. The contact times for diffusion setting are generally in the range of 1 to 24 hours, preferably in the range of 1 to 12 hours.

The temperature of the aqueous solution of the calcium salt used in diffusion setting is typically in the range of 5 to 95°C. For example, if the emulsion is prepared at a temperature of 40°C or higher, the temperature of the aqueous solution of the calcium salt may be in the range of 5°C to 90°C. However, the temperature of the aqueous solution of the calcium salt may then also have a lower temperature, e.g. a temperature in the range of 2°C to 40°C, in particular at temperatures in the range of 2°C to 20°C.

After the contact time, the aqueous solution of the calcium salt is separated from the particles. Separation of the aqueous solution of calcium salt can be achieved by conventional methods of separating coarse solids from liquids, e.g. by centrifugation, sieving the mixture of particles and the aqueous solution of calcium salt or by decantation of the aqueous solution from the particles. For example, the mixture can be rinsed through a sieve or the particles can be removed from the solution with a sieve plate.

For combined diffusion and internal setting the preformed particles, floating or swimming in the solution, can be transported with a belt conveyor, e.g. an inclined haulage conveyor, from the precipitation solution into trays or crates for dry curing. It is possible but not necessary to rinse the particles with water to remove adhering calcium salt.

The hardened products, or shaped products that are in the process of hardening, can be soaked with aqueous solutions of various seafood flavors, sodium chloride, food dyes, or combinations thereof. Alternatively, seafood flavors, or food dyes may also be added to the mass during emulsification.

Suitable seafood flavors include, for instance, the flavors and extracts offered by well-known flavor houses.

Typically, the shaped particles were soaked with aqueous solutions of seafood flavors at 0 °C to 20 °C for 5 h to 24 h, preferably at refrigeration temperature for 8 h to 18 h.

The hardened particles can be optionally heat treated to a core temperature of about 72°C or above for better shelf-stability and stored cool at temperatures of about 5°C or less, e.g. in a refrigerator, or deep frozen, e.g. at temperatures of below about -18°C in a deep freezer.

Optionally, shaped seafood products can be coated, e.g. with batters, breadcrumbs or external seasonings. Then the products are chilled, frozen or pasteurized and packaged for distribution as finished seafood substitute products for retail or food services. Conventional breading compositions can be used, well-known to those skilled in the art.

### Industrial scale processing

It is another object of the invention, to provide for a process suitable for industrial production of seafood substitutes, with a proper control of viscosity

For a transfer of the products from the laboratory scale to a possible industrial scale, it is preferred to adjust the viscosity of the mixture before solidifying. By adjusting to a proper viscosity, the processability is improved.

The viscosity preferably is larger than 14-20 Pa.s after 5 min. as measured by a RVA (Perten Instruments RVA 4500; 20°C, 30 min.rvc; speed 160 rpm; mPa.s), preferably 20-25 Pa.s at the processing temperature of 5-20°C, preferably 5-10°C. Generally, the viscosity will be about 14 Pa.s or higher, preferably about 20 Pa.s or higher, and even more preferred, about 25 Pa.s or higher. Generally, the viscosity will be about 1000 Pa.s or lower, preferably 100 Pa.s or lower. Such higher viscosities can for example be measured using a Brookfield Dial Viscometer. For reference purposes, the viscosity is measured at 20 °C.

Viscosity can be increased by use of additional thickening agents in the composition such as xanthan gum, methyl cellulose or modified or native starch. For this, the emulsions optionally are made cold and the thickeners are added. The hydrocolloids generally do not compete with the calcium ions for the binding sites of the alginate but increase the (starting) viscosity alone through their water binding capacity. A clear increase in viscosity can be observed visually, which can be objectively recorded by viscosity measurements (RVA; rheology especially for tougher dough), which helps to select the dosage ranges for the thickeners.

Thickeners are well known in the food industry, and depending on the aimed viscosity at a certain handling temperature, the average skilled person is able to choose the proper hydrocolloid.

Furthermore, the handling time of the mixture (if triggered by the internal setting components) preferably is sufficiently long enough to put bigger volumes of emulsions under similar conditions through industrial equipment.

Therefore, the handling time, being observable as a substantial increase in viscosity and/or solidifying of the emulsion generally is about 10 min or more, preferably is about 20 min or more, preferably half an hour or more. Generally, an observable change in hardness is about 3 hours or less, preferably about 2 hours or less. A suitable time period for handling / shaping is for example between about 20 min. and 1 hour. Such handling time can be achieved by using suitable components in the setting system as described herein. Therefore, the process preferably is implemented in such a way that a processing time of between 20 min and 1 hr is available before substantial hardening of the mass.

As explained above, a combination of internal setting and diffusion hardening can be used (depending on the product to be imitated) and results in suitable products.

For example, a certain holding time after shaping may be chosen for an internal setting, i.e. up to the moment when the molded particles can be removed from silicone mats or an industrial mold, and then further hardened in a calcium chloride solution.

In order to avoid a heating step for activation of the internal setting and to avoid issues with less compactness when activated (too) late for viscosity control which results in missing the window for optimal handling, another option for internal setting is to prepare an emulsion with for example glucono-delta-lacton (GdL) as acid source, tetra sodium pyro phosphate (TSPP) as a buffer/calcium sequestrant, and calcium carbonate as slowly dissolving calcium ion source. Sparingly soluble calcium carbonate is released by the acidification through GDL with a time delay (steered by TSPP as buffer and complexing agent for part of the released calcium) and can then form a network with the alginate. With this type of production, no heating step is necessary for activation of the internal setting.

As will be shown in the examples, several technologies achieve a range of products that resemble several different types of seafood in terms of hardness, chewiness and cohesiveness. The examples furthermore show that suitable viscosities and processing windows can be achieved using different ingredients as described herein. Based on this disclosure, the average skilled person is able to find alternative compositions that achieve comparable advantages, or the optimized process and end product characteristics that are suitable for (industrial) processing and customer satisfaction.

### EXAMPLES

The invention is hereinafter explained by experiments, describing the characteristic properties of the edible vegan seafood composition and by the related figures.

In the experiments and examples, the following abbreviations are used:
- A: alginate
- CaL: calcium lactate
- D: Diffusion
- GdL: Glucono-δ-lactone
- IT: internal setting
- M:: modified starch
- MC:: methyl cellulose
- PPI:: pea protein isolate
- TA: Texture Analyzer
- TSPP: Tetrasodium pyrophosphate

The following ingredients were used:
- CaLactate-pentahydrate, coated with 50 % Palm fat (Balchem)
- Calciumchloride-dihydrate (CaCl₂×2H₂O) Merck KgaA
- Methyl cellulose, J. Rettenmaier & Söhne GmbH - Vivapur Methyl Cellulose MC A4M
- Modified starch (E1422)
- Pea protein isolate having a protein content of approx. 81.5% as such, obtained from AGT Foods - Pea Protein 85 FFYP-85-C
- Sodium alginate with purity of > 90,8% calculated as sodium alginate, e.g. commercial product of Hewico - Hewigum NA 1
- Sunflower oil (commercially available)
- Tap water was used for all experiments.
- TSPP (BK Giulini)

### Equipment and auxiliary materials

- Force measurements (for most trials, if not otherwise mentioned): Final hardness, Chewiness, Cohesiveness was measured with a Texture Analyzer TA.XT plus (Stable Micro Systems), Loadcells: 5 kg and 50 kg, probing devices 25 mm Cylinder Perspex (P/25P); 20 mm Sphere Stainless (P/0,75S); (F expressed in g).
- Casings: Naturin R2L-D (Collagen^{∗} casings; Stuffing diameter: 44 mm (Nominal diameter: 43 mm), Length: 40 cm (^{∗}Used as model for shaping; resulting product samples are thus not completely vegan).
- Molds: silicone mats: Various shapes (Flexipan, Sasa Demarle Group)
- The statistical analysis and the evaluation of the designs of experiment are carried out with the software Minitab (Analysis of Variance).

### Seafood

The seafood products which were evaluated (texture analyzer, sensorial evaluation) during this project are listed in Tab. 1. All seafood was purchased frozen (from homogeneous batches) and could be taken individually for the respective measurements.

**Tab. 1: seafood types measured by texture analyzer**

| ***Type*** | ***Species*** | ***Treatment*** |
|---|---|---|
| *Japanese Scallops* | Mizuhoecten yessoensis | - |
| *Deep Sea Scallop* | Placopecten magellanicus | Glazed |
| *White tiger prawns* | Litopenaeus vannamei | Cooked, peeled, deveined tail on, 10 % glazing |

### General protocol of determining the final hardness of the protein mass - sample standardization:

For the experiments varied recipes of protein emulsions were prepared by mixing the indicated percentages of pea protein isolate (PPI) and sodium alginate, with 9 % of a vegetable oil (sunflower oil, if not otherwise mentioned) and water. The amount of water was adjusted to obtain 100 parts by weight of the emulsion. Mixing was carried out in a Thermomix TM5, speed setting 5, at >70°C - 90°C for about 3 min. (or at about 20°C, e.g. if heat-induced internal setting was used).

For the Texture Analyzer-measurements, always a similar form (regarding geometrical aspects, e.g. width and height of the sample) must be obtained in the curing process, otherwise the results cannot be compared.

For curing by diffusion setting, standardized samples were generated by placing 10 g of the emulsion into a cylindrical tube with 33 mm diameter and covered (by default) with 10 g of the diffusion solution (a 3% aqueous solution of CaCl₂-dihydrate; other concentrations would be indicated). The emulsion mass is separated from the cylinder wall with a spatula, thus allowing the emulsion to be undercut by the solution until a sphere is formed, which is cured in the solution for the indicated time (in general up to 24 hours at a defined temperature; typically at 20°C, if not otherwise indicated). After the curing by calcium diffusion into the globular particles, they are taken out of the solution and allowed to drip.

For curing by internal setting, the emulsion is prepared at room temperature, especially if heat-induced release of calcium is used, and the calcium source is added shortly before the end of the mixing process to avoid a premature reaction. The emulsion is then only shortly put into the tube with the CaCl₂-solution for 2-15 min., at a defined temperature (i.e. at 72°C, if coated materials are used), just until a skin is formed, then separated again from the solution and cured in a dry environment. In the case of deviating production, this is indicated.

Then firmness / hardness is assessed by a texture analyzer at a selected temperature (as described below) using the following conditions: 6 globular particles per experiment, measured 3 to 5 times each, compressed 5 mm with the standard method or with 50% compression (strain) with the TPA-method (described in the following).

The filled casings are cured for 48 h (longer time required due to slower transport caused by the casing and its diameter) in a 3% calcium chloride-dihydrate-solution in a ratio 1:1. For measurement slices of a defined slice thickness (1-2cm, depending on the original seafood object to be imitated) are cut from the mass solidified as a 'sausage stick'. Before the measurement the casing is removed to decrease the influence of an external boundary which could possibly lead to higher firmness values when measuring. The firmness is measured with a cylinder- and a sphere-probe.

For internal setting of an emulsion mass in casings, these are optionally shortly immersed into the CaCl₂-solution (at a defined temperature) for stabilization of the skin and then cured in a dry environment.

Alternatively, with the internal setting, the emulsion mass is filled into silicon mats with molds in the geometrical properties (diameter, shape, and height) of the seafood object to be imitated (different sizes and shapes are possible). Depending on the method used, the emulsion is initially heated in the mat in a cooking chamber or convection oven to 72°C for 2-15 min. (core temperature above 60°C), if coated materials are used, or, if no coated materials are used, without this step, and is cured in the mat and removed from the mold after the required curing time.

Both the texture analyzer and a descriptive sensory test with a trained panel have been performed to objectively describe the solidified mass.

In the food industry Texture Analyzers are used as a common method to get information about the firmness, cohesiveness, chewiness, springiness, the first bite and more.

A flat sample can be analysed with both, a cylinder and a sphere, whereas a globule is mostly measured with a cylinder.

A standard TA-method is selected for initial screening, by which the sample is only compressed once, and the firmness is determined by the maximum required force. This method measures the strength of the samples.

Another common method is the Texture Profile Analysis (TPA) by which it is possible to measure attributes like hardness, springiness, cohesiveness, and chewiness. The parameters are defined by force, area ratio and distance differences. During this method the sample is compressed twice with a percentage ratio of minimum 50% to simulate the chewing process. Between the two cycles a pause of 10 s allows the texture and structure of the sample to relax (Tab. 2).

**Tab. 2: Basic settings of method 1 & 2 to measure the texture of seafood and plant-based substitutes**

| | **Method 1 (TA-standard)** | **Method 2 (TPA)** |
|---|---|---|
| Compression Probe load cell | distance 5 mm cylinder/ sphere 5 kg | strain 50 % sphere 50 kg |

### Example 1

Initially, a design of experiments was carried out to identify data ranges for the final hardness (expressed as F [g]) of different protein-alginate-ratios in vegan products which could be compared with the hardness of native seafood (scallops), varying PPI (81.5 wt% protein) between 4.8 and 15.2 % and alginate between 1-2.1 %. The hardness measurement used the standard TA-method with a 5 kg load cell and the distance set to 5 mm on samples of 2 cm height and approx. 4 cm diameter.

The emulsions are produced according to the general process for solidified products as described above. For measurement at the typical consumption temperature (for seafood) the samples were heated for a defined time in a convection oven (under saturated steam) until a core temperature of 72°C is reached. (The time depends on the product because frozen products or products with a bigger diameter need longer to reach the core temperature of 72°C.)

For the globules the probing device 25 mm cylinder Perspex is selected, for samples with a bigger and flat surface the probing device 20 mm sphere stainless was used. Additionally, to the globules a part of the emulsion was filled and set in casings. 1 cm and 2 cm cuts were measured with the same method with the cylinder and the sphere to detect differences in the probing device and to determine any differences that needed to be considered in further measurements. The height of the sample is based on the sample height of the scallops. Multiple measurements of the cuts are possible only with the sphere as the probing device.

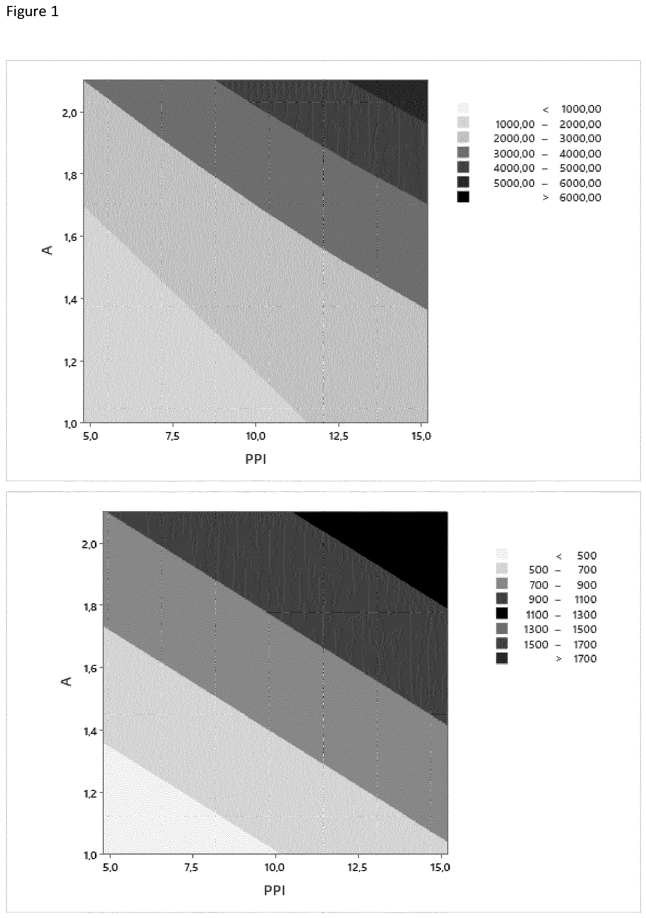

The DoEs have been evaluated with the appropriate software for the casings with 2 cm height at room temperature and heated at 72°C. The results in Fig 1 show that with a variety of protein / alginate amounts, a suitable range of hardness values can be obtained, to prepare a variety of sea-food analogues.

### Example 2

The hardness of scallops was measured first with the standard method - after cooking to a core temperature of 72°C (and measured hot to represent consumption temperature) - to identify the range of firmness. The slice height of the scallops between 1.5 and 2 cm is not homogeneous. With the spherical probe 6 measurements per sample are possible. With the cylinder only 2 measurements per piece are possible (one measurement per flat surface).

The problem with scallops is that some of them already disintegrate or show cracks during cooking, which are quickly destroyed and torn open by the measurement. Therefore, only those measurements per piece were taken into account that did not yet show any separation of muscles.

To get more information on the sensorial impressions from the chewing process - besides hardness also chewability and cohesiveness - the Texture Profile Analyze (TPA) method was tested. To improve sensitivity also a higher load cell (50 kg load) was used for the TPA-measurement. The probe compresses the sample two times with a defined strain. Only one measurement per piece is possible, as the sample piece is subjected to a lot of stress and is partly destroyed.

The method was verified with an emulsion of a protein-alginate-ratio of 10/1.55, filled into casings and subject to the diffusion setting. After 48 h the hardness was compared with the standard TA method and the TPA method on 2 cm thick slices (after removal of the casing). Samples were measured both in a ready-to-eat state (core temperature 72°C) and at room temperature. The strain was set up from 70-30% and for the TA method additionally to 5 mm distance of to compare the firmness with the data from the screening-DoE. All measurements were carried out with the 5 kg and 50 kg load cell to detect possible differences and measurement uncertainty.

After all results were evaluated, the TPA measurement with the 50 kg load cell and a percentage compression of 50% with the sphere was set as the new method to measure the texture of the vegan solidified products and the seafood products (mimicking the typical chewing effect). Trends were comparable but the TPA method provides additional information on the texture of the samples compared to the standard TA measurement.

Three emulsions were prepared with 8-12% pea protein isolate (81.5% protein as such) and 1% alginate. The emulsions were filled into silicone mats (scallop-shaped molds of different diameter but similar height) using a coated calcium source.

Two different solidifying techniques were used. In a first, using internal setting, coated calcium lactate was used, and the mass was heated up to a core temperature of above 60°C in the cooking unit so the coating melts and the calcium ions are available. After 24 h incubation at room temperature, the samples were measured.

Additionally, tests were made with the diffusion setting in casings using different composition ratios between 6-18% pea protein isolate, 0.5-1% alginate (and partly also different oil content to modify the texture).

Additionally, 10 samples of scallops and Japanese scallops were also measured in a ready to eat state.

The measured values (all after heating to consumption temperature) were evaluated, revealing which mixing ratio is closest to the seafood product in terms of strength.

The several experimental compositions are given in the below tables 3 and 4. d=diameter; Amounts are given in gram.

**Tab. 3**

| Experiment | CaL_8, d= 2.5 cm | CaL_10, d= 2.5 cm | CaL_12, d= 2.5 cm | CaL_8, d=5cm | CaL_10, d=5cm | CaL_12, d=5cm |
|---|---|---|---|---|---|---|
| Solidifying: | Internal | Internal | Internal | Internal | Internal | Internal |
| PPI | 8.0 | 10.0 | 12.0 | 8.0 | 10.0 | 12.0 |
| Alginate | 1.0 | 1.0 | 1.0 | 1.0 | 1.0 | 1.0 |
| Sunflower oil^{∗} | 7.5 | 7.5 | 7.5 | 7.5 | 7.5 | 7.5 |
| Water | 80.4 | 78.4 | 76.4 | 80.4 | 78.4 | 76.4 |
| Ca-lactate | 3.1 | 3.1 | 3.1 | 3.1 | 3.1 | 3.1 |

**Tab. 4**

| Experiment | D10 | D8 | D6 | D9/0.5/9 | D9/0.5/15 | D18/0.5/9 |
|---|---|---|---|---|---|---|
| Solidifying: | Diffusion | Diffusion | Diffusion | Diffusion | Diffusion | Diffusion |
| PPI | 10.0 | 8.0 | 6.0 | 9.0 | 9.0 | 18.0 |
| Alginate | 1.0 | 1.0 | 1.0 | 0.5 | 0.5 | 0.5 |
| Sunflower oil | 9.0 | 9.0 | 9.0 | 9.0 | 15.0 | 9.0 |
| Water | 80.0 | 82.0 | 84.0 | 81.50 | 75.5 | 72.5 |

| | | | | | | |
|---|---|---|---|---|---|---|
| ^{∗}The typical oil content of 9% was adjusted when a fat-coated Ca-source was used in the diffusion method. | | | | | | |

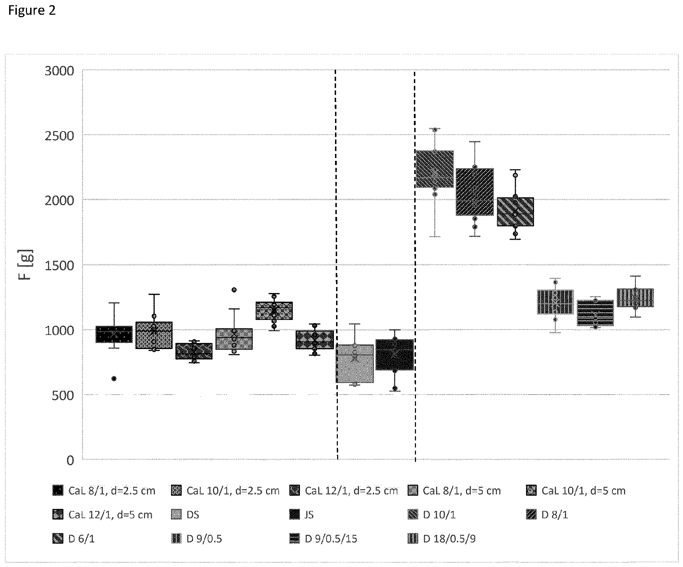

The results are shown in Fig 2, which shows the results of hardness [g] measurement with the TPA of the scallop samples and selected emulsions (diffusion and internal setting) - comparison as egg-box-model

For the internal setting, emulsions with a protein/alginate ratio of 8/1, 10/1 and 12/1 were produced. They are within the value range of the real scallops. In figure 2, this is indicated by the varying diameter. The sample height varies here slightly between 1.7 cm for the small molds (d=2.5 cm) and 2 cm for the large mold (d=5 cm).

Samples were also produced using the diffusion method with similarly high protein to alginate ratios. To minimize the hardness of the samples the protein/alginate ratio was adjusted. The oil content was also increased to check the influence on the strength. A reduction of the strength close to 1000 g by using the diffusion method was achieved by using a low amount of alginate (0.5 wt%), and a reasonably low amount of protein

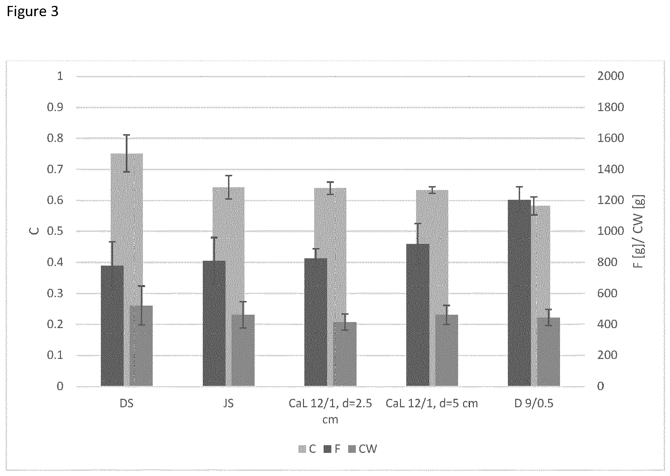

Next, full texture analysis was done on the samples of the same materials. Exemplary results are shown in Fig 3. The chewiness generally is largely comparable, while the cohesiveness is slightly lower for the vegan analogues.

### Example 3

Comparable tests were carried out for shrimps.

The texture of shrimps was measured with the TPA method and values were compared with vegan imitations of shrimp-texture, produced by diffusion setting or internal setting. Several composition ratios were tested as shown in Table 5.

Tests were carried out with ranges of 6-10% PPI and 0.5-1.55 % alginate (and partly also different oil content to modify the texture) for the diffusion setting and 10% PPI with 2-2.8% alginate (since shrimps have high firmness) for the internal setting.

A comparison to shrimps needs to consider the sample height, which is for shrimps approx. 1 cm (in the front part, close to the head) and 0.5 cm further to the tail.

Vegan products produced from emulsions filled into casings with a probe height of 1 cm for both diffusion and internal setting were used for the measurements.

Measurements were carried out after heating to consumption temperature.

**Tab. 5**

| Experiment | 9/0.5/15 | 6/1/15 | 10/1 | 10/1.55 | Cal-10/2.8 | CaL-10/2 |
|---|---|---|---|---|---|---|
| Solidifying technique | Diffusion | Diffusion | Diffusion | Diffusion | Internal | Internal |
| PPI | 9.0 | 6.0 | 10.0 | 10.0 | 10.0 | 10.0 |
| Alginate | 0.5 | 1.0 | 1.0 | 1.55 | 2.8 | 2.0 |
| Sunflower oil^{∗} | 15.0 | 15.0 | 9.0 | 9.0 | 7.5 | 7.5 |
| Water | 75.5 | 78.0 | 80.0 | 79.45 | 76.6 | 77.4 |
| Ca-lactate | | | | | 3.1 | 3.1 |

| | | | | | | |
|---|---|---|---|---|---|---|
| ^{∗}The typical oil content of 9% was adjusted when a fat-coated Ca-source was used in the diffusion method. | | | | | | |

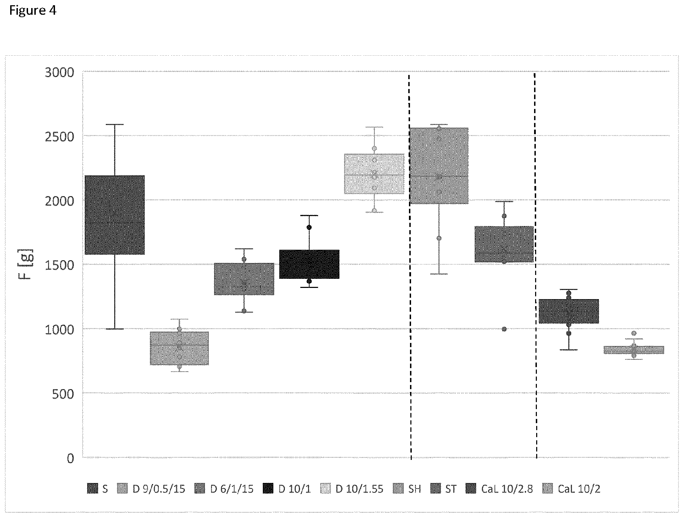

Two measurements per shrimp were taken. One at the head and one close to the tail of the shrimp. A wide range within the measured values can be seen. The results are shown in Fig 4 for the Texture Analyzer measurements.

For the diffusion setting a ratio of 10 % protein to 1.55 % alginate comes closest to the firmness of the shrimp.

The example with 10 g of protein and 2.8 alginate gave best results for the internal setting.

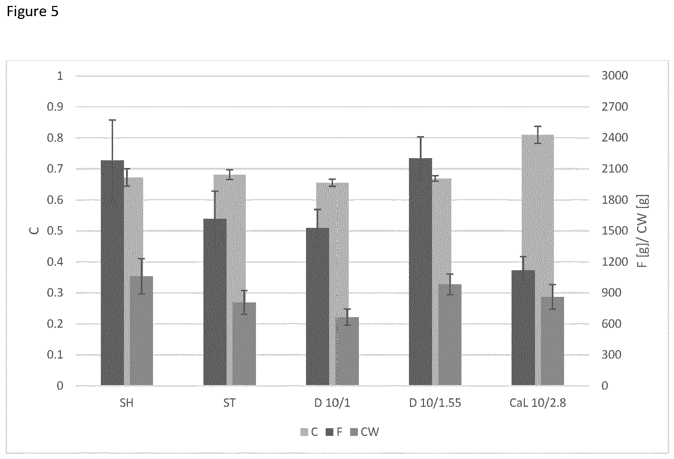

TPA measurements for hardness, chewiness and cohesiveness, show the results as given in Fig. 5.

The emulsions that best reflect the properties of shrimp seem to be between 10/1 and 10/1.55. Since the strengths vary greatly within the shrimp sample, an average value for strength would be conceivable here. It would be possible to compare both samples in a sensory tasting of a shrimp sample and to take the subjective texture perception into account.

### Example 4

Further experiments were performed for the manufacturing of comparable products with delayed solidification. Delayed solidification can be a useful measure to improve processability on an industrial scale.

In this example using internal setting, an emulsion was prepared with calcium carbonate, GdL and TSPP. Sparingly soluble calcium carbonate is released by acidification through GdL with a time delay (steered by TSPP as neutralizing agent, and complexing agent for part of the released calcium) and can then form a network with the alginate. With this type of production, no heating step is necessary for activation of the internal setting but a sufficient window for the handling time is provided.

Emulsions were tested with 12 % PPI and 1% alginate and varying amounts of calcium carbonate, GdL and TSPP to find out best concentrations for hardness, time for handling and setting.

The following compositions have been made:

**Tab. 6**

| Experiment | 1 | 2 | 3 |
|---|---|---|---|
| Solidifying: | Internal | Internal | Internal |
| PPI | 12 | 12 | 12 |
| Alginate | 1 | 1 | 1 |
| Sunflower oil | 9 | 9 | 9 |
| Water | 73 | 73.25 | 75.5 |
| CaCO₃ | 1 | 1 | 0.5 |
| GdL | 3.5 | 3.5 | 1.75 |
| TSPP | 0.5 | 0.25 | 0.25 |

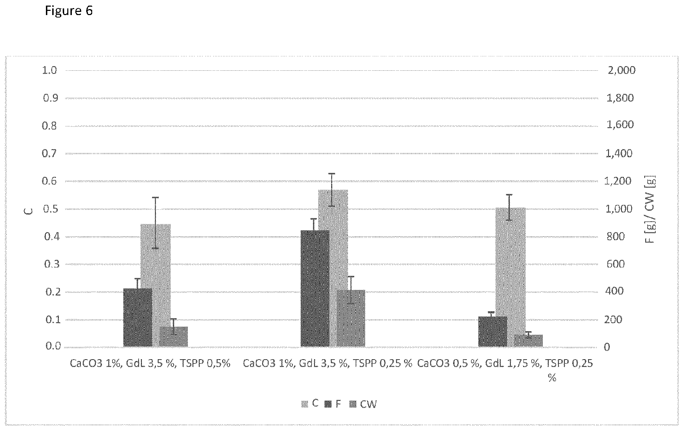

Calcium carbonate (1%) and an amount of TSPP (less than 0.5%) provides the requirements of favourable strength compared to the strength of scallops and the above-described emulsions for internal setting with coated calcium lactate. Decreasing the TSPP content caused an increase in hardness at the same CaCO₃ content. The hardness obtained with a GdL content of 3.5 % and a TSPP content of 0.5 % in the above-described formulation is about 425 g. Reducing the TSPP by half, the hardness increased to 842 g. If all three components were reduced, the hardness of the final products decreased (224 g) (as shown in Fig. 6). The cohesiveness was similar for all three samples, and the chewiness was highest with 414 g in the system where only the TSPP content was reduced.

The results also showed that the solidification could be easily delayed for about half an hour, depending on the amounts of GdL and TSPP. Comparable hardness was obtained as with the calcium lactate experiment.

### Example 5a

A further set of experiments was prepared with additional thickening agents to increase the initially lower viscosity from the laboratory scale and the associated processability for handling of the emulsion on industrial shaping equipment.

Compositions were prepared, as shown in the next table:

**Tab 7.**

| Experiment | 1 | 2 | 3 |
|---|---|---|---|
| Solidifying: | CaL; 1 direct, 1 later filling | CaL; 1 direct, 1 later filling | CaL; 1 direct, 1 later filling |
| PPI | 12 | 12 | 12 |
| Alginate | 1 | 1 | 1 |
| Sunflower oil | 7.5 | 7.5 | 7.5 |
| Water | 76.4 | 75.4 | 74.4 |
| CaLactate | 3.1 | 3.1 | 3.1 |
| Xanthan | - | 1 | 2 |

Based on the results of the examples described above, the emulsion produced with the coated calcium source with a ratio of PPI : alginate 12:1 was selected first as a 'reference' emulsion (STD) for the following trials; i.e. an emulsion for comparison. The viscosity was evaluated initially optically. The hardness, cohesiveness, and chewiness have been determined by TPA to indicate a change in hardness by changing the basic formulation. Attention was paid to the different structures due to the addition of different thickening agents to the compositions. Additionally, this aspect may have to be adjusted when selecting the appropriate manufacturing process and the appropriate mixing ratio of the protein-alginate ratio for the product to be imitated.

One group of trials was carried out with xanthan gum (X). Here, a clear increase in viscosity was observed visually. To assess the effect of xanthan gum on the final hardness, the produced samples were tested by TPA-measurement. Half of the emulsion was filled directly into the silicon mats (d = 2.5 cm), but heated only after 3 h. The other half of the produced emulsions were filled later into the silicon mats to observe an effect of the disturbance on the forming grid structure. Emulsions to which xanthan gum was added showed a rapid optical lump formation after the stirring process.

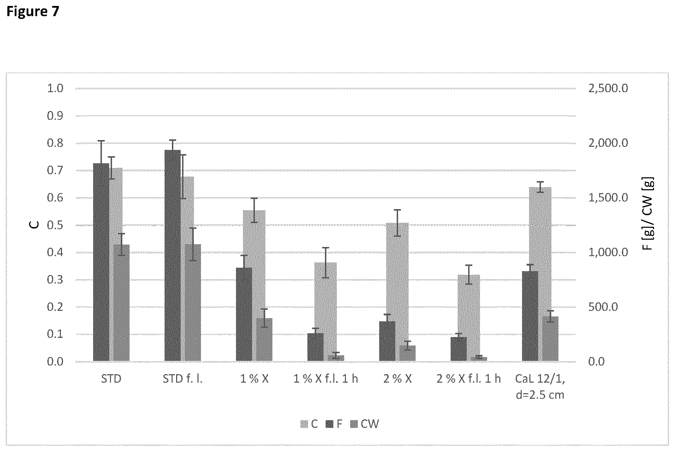

The reference value of the emulsion 12/1 of the internal setting compared to the previous strength values from previous trials was here, with a hardness of 1816 g, almost twice as high as the measured values before (Fig. 7). It was observed that gradual curing took place before the heating step. Therefore, the PPI12/A1-reference previously measured in example 2 (CaL12/1, d=2,5 cm; Fig. 3) is also again compared as reference (with a hardness of 826g) but a similar cohesiveness.

Xanthan gum increased the viscosity of the emulsion optically, but in return, reduced the hardness by about around 50 % with 1 % Xanthan (859 g). For the same emulsion, which was filled 1 h later, the hardness of 258 g is again lower compared to the sample which was filled directly into the mold. The same phenomenon was observed in the emulsion with the addition of 2 % xanthan gum. The hardness of the sample, which was directly filled into the silicon mat, was 368 g.

### Example 5b

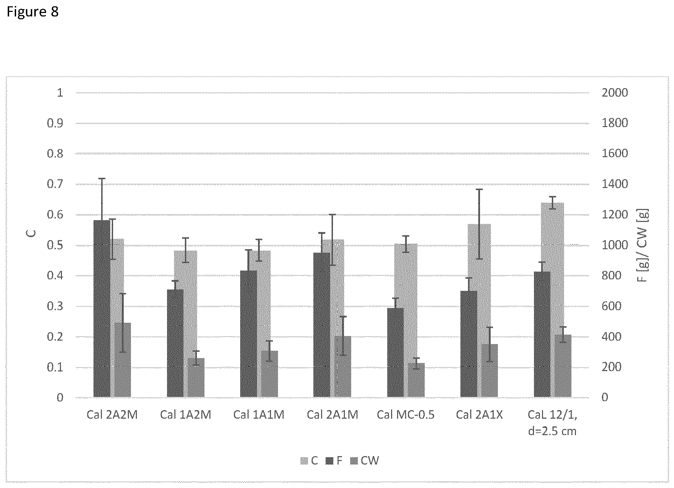

Furthermore, for the internal setting with calcium lactate, it was tested whether methyl cellulose and modified starch have a similar influence on the system as xanthan gum, but additionally also with higher alginate content, but without delay in filling (Fig. 8). Again, the PPI12/A1-reference previously measured in example 2 (CaL12/1, d=2,5 cm; Fig. 3) is compared as reference (with a hardness of 826g).

The following compositions have been made:

**Tab 8.**

| Experiment | 2A2M | 1A2M | 1A1M | 2A1M | 1A0.5MC | 2A1X |
|---|---|---|---|---|---|---|
| Solidifying: | Internal | Internal | Internal | Internal | Internal | Internal |
| PPI | 12 | 12 | 12 | 12 | 12 | 12 |
| Alginate | 2 | 1 | 1 | 2 | 1 | 2 |
| Sunflower oil | 7.5 | 7.5 | 7.5 | 7.5 | 7.5 | 7.5 |
| Water | 73.4 | 74.4 | 75.4 | 74.4 | 75.9 | 74.4 |
| CaLactate | 3.1 | 3.1 | 3.1 | 3.1 | 3.1 | 3.1 |
| Modified starch (M) | 2 | 2 | 1 | 1 | | |
| Methyl cellulose (MC) | | | | | 0.5 | |
| Xanthan | | | | | | 1 |

Like xanthan gum also the use of methyl cellulose visually increased the viscosity, but the hardness (589 g) after curing was not as high compared to the reference emulsion.

Increasing the alginate content by 1 % to 2%, with 1% xanthan gum also increased the viscosity of the emulsion visually and the hardness (700 g) was close to the range of the reference (12/1) without a thickener.

The first visual impression for the modified starch was that it influenced the viscosity positively comparable to xanthan gum. Using modified starch, the hardness differs depending on the amount added. Compared to the reference 12/1 from the previous tests (example 2, Fig.3, CaL12/1, d=2.5 cm; strength 826 g), with 1% modified starch and 1 % alginate, the hardness is 832 g. Adding 2 % modified starch with a protein/alginate ratio of 12/1, the hardness is 708 g. If the alginate content is increased to 2 %, the hardness increases to 951 g with 1 % modified starch and to 1162 g with 2 %. The Chewiness increased in all samples when 2 % alginate was used. The influence on strength seems to be less from the modified starch compared to xanthan and methyl cellulose and strength is comparable to the reference without additional viscosity-increasing thickeners.

### Example 5c

Since the emulsion with Calcium carbonate, GdL and a low TSPP content had a similar hardness compared to the standard emulsion of the coated calcium source, also here, the increase of viscosity of the emulsions was tested with the modified starch and xanthan gum.

The following compositions have been made:

**Tab. 9:**

| Experiment | 1A1M | 1A2M | 2A1M | 2A2M | 2A1X | 1A1X | 2A1M |
|---|---|---|---|---|---|---|---|
| Solidifying: | Internal | Internal | Internal | Internal | Internal | Internal | Internal |
| PPI | 12 | 12 | 12 | 12 | 12 | 12 | 12 |
| Alginate | 1 | 1 | 2 | 2 | 2 | 1 | 2 |
| Sunflower oil | 9 | 9 | 9 | 9 | 9 | 9 | 9 |
| Water | 72.25 | 71.25 | 71.25 | 70.25 | 71.25 | 72.25 | 71.15 |
| CaCO₃ | 1 | 1 | 1 | 1 | 1 | 1 | 1 |
| GdL | 3.5 | 3.5 | 3.5 | 3.5 | 3.5 | 3.5 | 3.5 |
| TSPP | 0.25 | 0.25 | 0.25 | 0.25 | 0.25 | 0.25 | 0.35 |
| Mod. starch | 1 | 2 | 1 | 2 | | | 1 |
| Xanthan | | | | | 1 | 1 | |

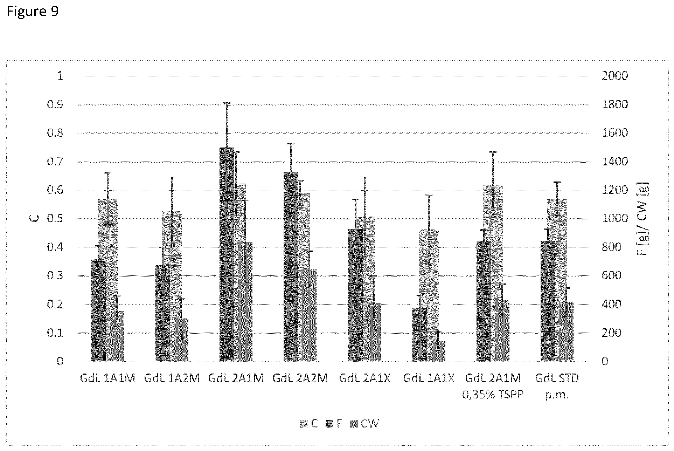

A higher alginate content can be seen to contribute to increased hardness and by itself contributes clearly to a higher viscosity. By increasing modified starch, the final hardness decreased (1A1M: 717 g, 1A2M: 672 g/ 2A1M: 1502 g, 2A2M: 1330 g). Using xanthan gum as a thickener, the final hardness is much more reduced compared to modified starch (2A1X: 928 g; 1A1X 371 g). By increasing the TSPP content from 0.25 % to 0.35 % (GdL 2A1M), the hardness decreases from 1502 g to 844 g (Fig. 9). In the figure also the previously measured standard composition of the GdL-based system (PPI 12 / A 1; Calcium carbonate 1, GdL 3.5, TSPP 0.25; Fig. 6; 842 g) is shown as reference.

For the test of handling time, selected emulsions were filled in silicon mats and the curing time was measured (Tab 10). The contour sharpness expresses when the mass could be removed of the silicone mat. Frequently, the masses were quickly contour sharp respectively showed a visible skin formation (20 min).

**Tab. 10: Handling time-related to the contour sharpness (hardening time) for the GdL system; Standard Reference Emulsion for the test with different alginate and thickeners content: CaCO₃ 1%, GdL 3.5 %, TSPP 0.25 %; measurement till Contour Sharp (CS)**

| t [min] | | | | | | | |
|---|---|---|---|---|---|---|---|
| | Start | 10 | 20 | 30 | 40 | 70 | 120 |
| CaCO₃ 1%, GdL | Flowable | Flowable | Slight skin | Slight skin | Still sticky | CS | |
| 3,5 %, TSPP 0,5 % | | | formation | formation | | | |
| Same, but TSPP 0,25% | Flowable | Flowable | Visible skin | CS | | | |
| all 3 additives halved | Flowable | Flowable | Slight skin formation t [min] | | Still sticky | | CS |
| All emulsions below: CaCO₃ 1 %, GdL 3.5 %, TSPP 0.25 % | | | | | | | |
| 2A1X | Viscous | Sticky | CS but sticky | CS | | | |
| 1A1X | Viscous but creamy | Visible skin | Still sticky | | CS | | |
| 1A1M | Viscous but flowable | Visible skin | Visible skin | CS | | | |
| 1A2M | Viscous but flowable | Visible skin | CS | | | | |
| 2A1M | Viscous | CS but sticky | Still sticky | CS | | | |

Observations also showed that when the mass was moved during the curing process, for example, for checking the form stability of the samples, the structure formed was softer compared to the other samples. Furthermore, it should be noted that the curing time is reduced for the GdL system if less TSPP (0.25 %) is added (30 min). Reducing the calcium source, GdL and TSPP simultaneously led to an increase in the curing time from 70 min to 120 min. Adjusting the alginate content and the thickener content of the emulsion in which the TSPP content is only 0.25 % visually changes the initial viscosity, but not the curing time (30 min) as is apparent from Table 10.

### Example 6a

In this example, the sample preparation was adjusted in order to generate further improved samples with regard to the hardness of shrimp under the opposing influence of viscosity increasing thickeners. While scallop imitations can be formed into molds (taler shape), strings were prepared from the emulsions with a conventional filling nozzle to imitate the shape of shrimps. Selected results from the handling tests are shown in the following, as they were appropriate for shrimp imitation.

With the CaCO₃- / GdL-based internal setting system, up to 2 % of modified starch (M) was added to the emulsion to generate sufficient viscosity for the handling and fill-ability of the mass. These samples were compared with the internal setting of a coated calcium source and diffusion setting for different curing times, both also with the use of modified starch.

Additional parameters were then tested, for example the influence of different sizes of the filling nozzles, direct immersion in the diffusion solution or an initial depositing of the mass. The diffusion time differed depending on the production method.

The following compositions have been made:

**Tab. 11:**

| Experiment | Cal12/2/2 | GdL12/2/2 | GdL12/2/1 | D10/1.55/2 5hr | D10/1.55/2 20hr | D10/1/2 5hr | D10/1/2 20hr |
|---|---|---|---|---|---|---|---|
| Solidifying: | Internal | Internal | Internal | Diffusion 5h | Diffusion 20h | Diffusion 5h | Diffusion 20h |
| PPI | 12 | 12 | 12 | 10 | 10 | 10 | 10 |
| Alginate | 2 | 2 | 2 | 1.55 | 1.55 | 1 | 1 |
| Sunflower oil | 7.5 | 9 | 9 | 9 | 9 | 9 | 9 |
| Water | 73.4 | 70.25 | 71.25 | 77.45 | 77.45 | 78 | 78 |
| CaLactate | 3.1 | - | - | | | | |
| CaCO₃ | | 1 | 1 | | | | |
| GDL | | 3.5 | 3.5 | | | | |
| TSPP | | 0.25 | 0.25 | | | | |
| Modified Starch (M) | 2 | 2 | 1 | 2 | 2 | 2 | 2 |

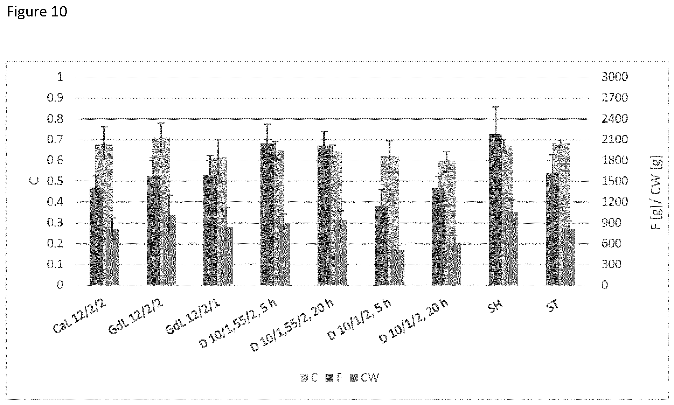

The coated calcium- and the GdL system samples only remained in the solution for up to one minute, whereas the samples using the diffusion method remained in the solution for 5 and 20 hours. After the samples were removed from the diffusion solution, the heat initiation step was executed for the coated calcium source. The sample D 10/1.55/2 had a hardness of 2040 g with a diffusion time of 5 h and 2008 g with a diffusion time of 20 h. For the D 10/1/2 emulsion, the hardness after 5 h in the diffusion solution is 1139 g, and after 20 h it is 1399 g (Fig. 10).

The emulsion with Calcium lactate 12/2/2 had a hardness of 1408 g, and the emulsion with GdL 12/2/2 a hardness of 1566 g. The cohesiveness is lowest in sample D 10/1/2, 20 h with 0.59 and highest in sample GdL 12/2/2 with 0.70. The lowest chewiness is shown by sample 10/1/2, 5 h with 503 g. The highest chewiness is shown by the sample GdL 12/2/2 with 1012 g. Quite comparably measured for the shrimp, the cohesiveness is 0.67 in the head region and 0.68 in the middle region of the shrimp. The chewiness is 1058 g in the head region and 805 g in the tail region.

### Example 6b

Emulsions for which viscosity should be measured by RVA (20°C, 30 min.rvc; speed 160 rpm; mPa.s) were selected with a hardness significantly similar compared to the seafood products (internal setting with calcium lactate or GdL-basis and different amounts of alginate and modified starch; CaL1A2M, CaL2A1M, GdL1A2M; GdL2A1M):

**Tab. 12:**

| Experiment | STD | CaL1A2M | CaL2A1M | CaL1A2X | GdL1A2M | GdL2A1M |
|---|---|---|---|---|---|---|
| Solidifying: | Internal | Internal | Internal | Internal | Internal | Internal |
| PPI | 12 | 12 | 12 | 12 | 12 | 12 |
| Alginate | 1 | 1 | 2 | 2 | 1 | 2 |
| Sunflower oil | 7.5 | 7.5 | 7.5 | 7.5 | 9 | 9 |
| Water | 76.4 | 74.4 | 74.4 | 74.4 | 71.25 | 71.15 |
| CaLactate | 3.1 | 3.1 | 3.1 | 3.1 | - | |
| CaCO₃ | | | | | 1 | 1 |
| GDL | | | | | 3.5 | 3.5 |
| TSPP | | | | | 0.25 | 0.35 |
| Modified Starch | | 2 | 1 | | 2 | 1 |
| Xanthan | | | | 1 | | |

The emulsion on GdL-basis with 2A1M showed visually a suitable viscosity, but the hardness values were considered on the high side; therefore, the approach was carried out with 0.35 % TSPP. Previous trials have shown that this can reduce the hardness while maintaining the viscosity. The handling time was increased consequently.

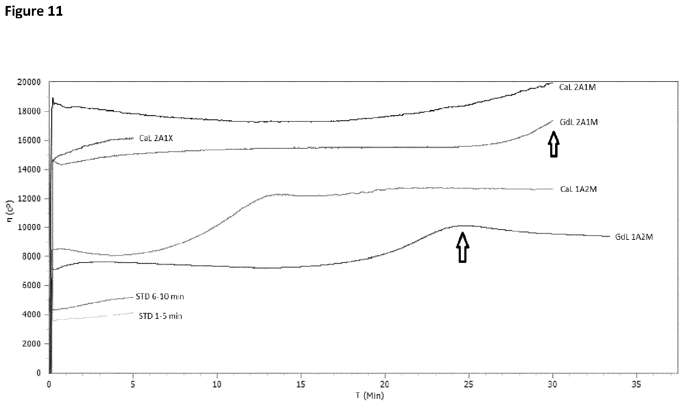

To assess the effects more precisely, the viscosities of these emulsions were measured by RVA 5 minutes after the respective calcium source was added. It is noted that these viscosities are only approximate values, as the emulsions are stirred during the measurement, which disturbs the forming network that was already formed. The point of curing of the GdL system is marked in Fig. 11, which was visually confirmed in parallel.

The reference (STD without modified starch) was measured twice for 5 minutes as an increase in viscosity was observed. Max. after 10 min (after the calcium source was added), the final viscosity was 5246mPa.s. The emulsion CaL2A1M showed that at the same alginate content, the viscosity is higher with modified starch (19,936 mPa.s) compared to xanthan gum (CaL2A1X; 16,130 mPa.s). If only the modified starch content was increased, the emulsion is optically similar viscous, but the measured value is lower with 12,653 mPa.s (CaL1A2M). Alginate itself contributes substantially to the base viscosity.

An increased TSPP content by 0.1 % to 0.35%; together with a higher alginate content shows a viscosity of 17,351 mPa.s) and leads to a longer handling time by approx. 5 minutes (GdL2A1M; curing point at 30 min.) compared to the emulsion with only increased modified starch and lower amount of alginate, with 0,25% TSPP (GdL1A2M: 9,936 mPa.s).

Since the emulsions are stirred during the RVA measurements, an additional rheometer measurement was carried out for selected emulsions to avoid a possible influence of stirring on the measurement (Bohlin Instruments CVO; total observation time approx. 50 min; 25°C; 0.1 Hz).

Initially 6 internal setting compositions were tested, with calcium lactate or GdL-basis and different amounts of alginate (1 or 2 %) and modified starch (1 or 2%), similar to the design for the RVA-measurements. In a separate measurement also the basic dry matter of protein and alginate was increased together by 2 % in a proportional ratio together with a higher amount of modified starch (4%) and tested with the diffusion setting (without calcium) and the GDL-based internal setting system:

**Tab. 13:**

| Experiment | IT 2A1M | GdL 2A1M | IT 2A2M | GdL 2A2M | IT 1A2M | GdL 1A2M | D13.7P 2.3A4M | GdL13.7P 2.3A4M |
|---|---|---|---|---|---|---|---|---|
| Solidifying: | internal | Internal | internal | internal | Internal | internal | diffusion | internal |
| PPI | 12 | 12 | 12 | 12 | 12 | 12 | 13.7 | 13.7 |
| Alginate | 2 | 2 | 2 | 2 | 1 | 1 | 2.3 | 2.3 |
| Sunflower oil | 7.5 | 9 | 7.5 | 9 | 7.5 | 9 | 9 | 9 |
| Water | 74.4 | 71.15 | 73.4 | 70.25 | 74.4 | 71.25 | 71.0 | 66.25 |
| CaLactate | 3.1 | | 3.1 | | 3.1 | | | |
| CaCO3 | | 1 | | 1 | | 1 | | 1 |
| GDL | | 3.5 | | 3.5 | | 3.5 | | 3.5 |
| TSPP | | 0.35 | | 0.25 | | 0.25 | | 0.25 |
| Modified Starch | 1 | 1 | 2 | 2 | 2 | 2 | 4 | 4 |

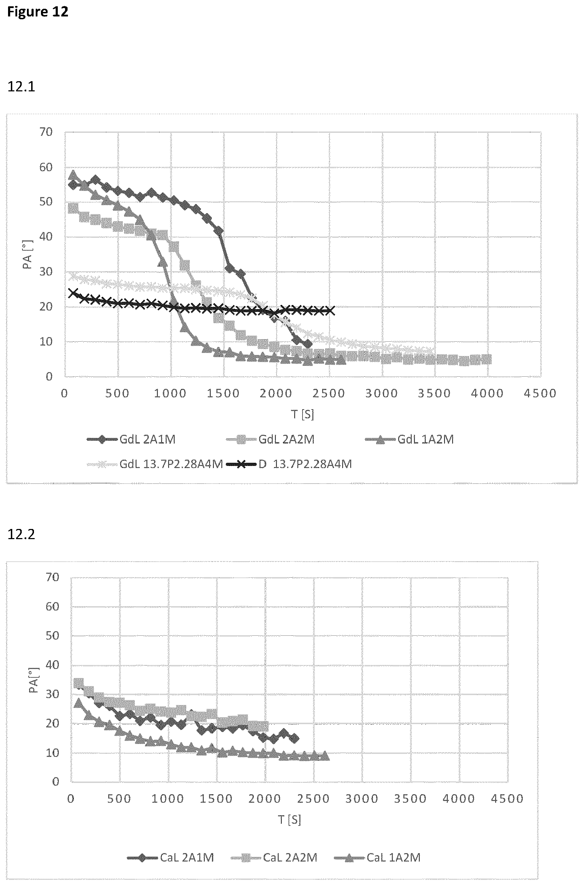

Fig. 12 shows the measured phase angles for the recorded emulsions. A phase angle lower than 45° indicates the point of becoming a more solid emulsion. The measurement was started 5 minutes after the emulsions were produced (resp. the calcium source was added). For the initial 6 emulsions, those made with the GdL system have an initial phase angle of 50-60°. The emulsion GdL2A1M undercut the 45° after 22.4 minutes, the preparation GdL 1A2M after approx. 12 minutes and the preparation GdL 2A2M after 4.8 minutes. All emulsions made with the internal setting with a coated calcium source show a phase angle of less than 45° from the starting point (becoming solid or showing lump-like aggregations right from the beginning).

The elastic modulus G′ measures the hardness of the emulsion. The higher the measured value, the higher is the hardness. The viscous modulus Gʺ states the viscosity of the emulsion. The lower the measured viscosity modulus, the more viscous is the tested emulsion at this measured point Tab. 14). When G′ is lower than Gʺ the mass is characterized as being more viscous than solid and vice versa.

For the initial 6 emulsions, the elastic modulus (G′) after 5 minutes is lower for the GDL-system but is in most cases higher after 33 minutes (2A2M; 1A2M) (3143 Pa/ 2151 Pa) compared to the Ca-Lactate-system (1668 Pa/1704 Pa). For the GdL-emulsions curing occurs (faster) over time, the emulsions turn harder.

On the other hand, the viscous module (Gʺ) appears to be lower for the GdL-system, which means that the masses are more viscous than the Ca-Lactate-system.

The values for all of the first 6 batches also show that the materials where more viscous with increased amount of modified starch and alginate.

**Tab. 14: G′ and Gʺ [Pa] measured 5 minutes after the emulsions were produced and after 33 minutes for certain batches and the detected time, for which the phase angle is lower than 45°.**

| | | Cal 2A1M | GdL 2A1M | Cal 2A2M | GdL 2A2M | Cal 1A2M | GdL 1A2M | D13.7 P2.3A4M | GdL13.7 P2.3A4M |
|---|---|---|---|---|---|---|---|---|---|
| After 5 min | G′ | 394 | 133 | 582 | 262 | 254 | 40 | 1774 | 1853 |
| | Gʺ | 259 | 190 | 390 | 293 | 130 | 63 | 785 | 1017 |
| after 33 min | G′ | 1316 | 1218 | 1668 | 3143 | 1704 | 2151 | 2281 | 2877 |
| | Gʺ | 359 | 370 | 575 | 471 | 297 | 207 | 782 | 1066 |
| Phase angle > 45° [min] | | | 22.4 | | 4.8 | | 11.8 | | |

For the additional 2 emulsions prepared with the diffusion setting (with calcium chloride solution) and the GDL-based internal setting system with overall higher protein, alginate and modified starch contents (D13.7P2.3A4M; GdL13.7P2.3A4M), the viscous and elastic modules increased again. (The higher values are expressed on a logarithmic scale. Due to their high viscosity these 2 emulsions were not prepared in a Thermomix but in a bowl chopper). Here the phase angle was right from the beginning below 45 °, since G' was already higher than G" (the influence of the hardness was higher than of the viscosity).

### Example 7: Sensorial evaluation of the seafood substitutes

A descriptive sensorial evaluation of the seafood products and the plant-based substitutes was carried out by 14 sensorially trained and qualified test subjects concerning the texture to complement / to be compared with the TPA measurements from the texture analyzer.

Compared were the scallop-substitutes prepared with the internal setting with coated calcium lactate with 12% protein and 1 % alginate, the small (2.5 cm) and the medium diameter (4.5 cm), and the diffusion setting with 9% protein and 0.5% alginate with Deep Sea and Japanese scallops (full compositions shown in example 2).

Most testers rated in particular the attributes firmness / chewing resistance, homogeneity, plasticity / elasticity and overall mouthfeel /haptics to be very similar for the substitutes compared to the genuine scallop. Especially the small shape substitute with internal setting was evaluated overall to be closest and the sample produced with the diffusion process was rated closest in elasticity.

Whilst the attribute fibrous was more typically for the genuine scallops, the substitutes were perceived somewhat more composite.

Despite the slight differences, the overall assessment by the panel was that the scallop-substitutes prepared with the internal setting were very well resembling natural scallop.

The same descriptive sensorial evaluation as described before was carried out by 15 sensorially trained and qualified test subjects concerning the texture of the shrimp imitations compared to genuine shrimps. For the sensory analysis, samples were selected, which were produced using the diffusion method (10% PPI/1.55% alginate/2% modified starch), Internal setting with the CaLactate- (12/2/2) and GdL-method (12/2/2), i.e. already with modified starch (full compositions shown in example 6a).

Whilst also the shrimp was perceived as more fibrous than the plant-based imitations, most testers rated in particular the sample from the diffusion setting and the sample from the GdL-based internal setting to be closest to the genuine shrimp regarding the attributes firmness, homogeneity and elasticity and for the GdL-based substitute the best overall mouthfeel compared to the shrimps.

In line with the results from the texture analysis, the shrimp is rated harder than the scallop. This property is best simulated by the substitute from diffusion setting.

Despite slight differences, the overall assessment by the panel was that the vegan shrimp substitutes prepared with the diffusion setting and the internal setting with the GdL-based system were overall rated as very comparable to the genuine shrimp.

### Example 8: Industrial processing

The viscosity increased emulsions PPI/Alginate/Modified starch 12/2/2 have been tested regarding their machinability and processability, fill-ability and form stability on industrial filling and forming machines. The emulsions were produced by means of a bowl cutter.

The viscosity of the emulsions was increased further to increase the ability of the emulsion to be used in a reliable filling process. For this purpose, the amount of modified starch and total dry matter (up to approx. 13.7% PPI and 2.3 % alginate, and 4% modified starch) was increased in relation to the total amount of the composition.

To prove the form stability and contour sharpness, on one hand Forming systems based on a rotating hole plate system were used. By selecting the rotating hole plate, the shape and diameter of the products can be individually adjusted. In a next experiment, the products were shaped with a nozzle-forming system. Different shapes and sizes were obtained by choosing different nozzles.

The masses could be filled directly into a calcium chloride bath for diffusion setting or were first placed on a conveyor belt, sprayed with a 3% CaCl₂ solution during the portioning process, partially plated by a flattening tape. Subsequently, the products were removed from the band or transferred to the calcium chloride bath. In some other experiment, hardening was achieved in a dry environment, when an internal setting method was used.

### Example 9

Further illustrative compositions of the emulsion for four types of seafood are given in the table below:

**Tab. 15:**

| **Ingredient** | **Scallops [%]** | **Clams [%]** | **Calamari [%]** | **Popcorn Shrimps [%]** |
|---|---|---|---|---|
| **Basic emulsion** | **A** | **B** | **C** | **D** |
| pea protein isolate | 6.4 | 8.8 | 8.8 | 4.8 |
| sodium alginate | 1.4 | 1.9 | 1.9 | 1.0 |
| citrus fiber | 0.2 | 0.3 | 0.3 | 0.2 |
| canola oil | 10.0 | 10.0 | 10.0 | 10.0 |
| Water | 82.0 | 79.0 | 79.0 | 84.0 |

| Soaking of solidified mass | **Concentration in soaking solution [%]** | | | |
|---|---|---|---|---|
| scallop aroma | 1.7 | | | |
| clam aroma | | 4.9 | | |
| calamari aroma | | | 3.3 | |
| shrimp aroma | | | | 4.9 |
| pink dye | | | | 0.4 |
| orange dye | | | | 0.2 |
| salt (NaCl) | | 0.4 | | |

### Production example general (diffusion):

Step 1: the required amount of water at a temperature of 70-90°C was added into a mixing vessel equipped with rotating knife blades (like bowl choppers, cutters, Stephan cutters, high speed emulsifiers, in particular those based on the rotor-stator principle, colloid mills and combinations thereof with a blender).
Step 2: the respective amounts given in the table of components were added, and the total mass was mixed under shearing at 3000-5000 rpm for 10 minutes until a stable emulsion was achieved, whilst keeping the temperature at 70-90°C.
Step 3: A solution was prepared containing 3 wt% calcium chloride-dihydrate in water at 5-10°C.
Step 4: The emulsion was transferred into a first vessel, containing a sufficient amount of the solution made up in step 3, by pressing the emulsion through a grid in order to achieve a uniform, not too big particle diameter of about 25 mm. Instead of a grid, a rotating hole plate or a diaphragm knife can be used. The particles were precipitated/coagulated for 5 min. under stirring at 100-1000 rpm while keeping the temperature at 5-10°C. The amount of solution was sufficient to cover the particles. During this period a skin was formed on the surface of particles, whereby the particles became mechanically stable but did not completely harden.
Step 5: Then the particles were taken out of the solution and transferred into a separate vessel containing a cold (5-10°C) 3 wt% aqueous solution of calcium chloride-dihydrate in an amount sufficient to cover the particles (in a volume ratio of about 1 : 1 compared to the emulsion), optionally with gentle stirring and keeping the temperature of the solution at 5-10°C, in order to generate complete uniform solidified mass formation.
Step 6: After a typical hardening time of 12 to 20 h the solidified mass particles were taken out of the solution and rinsed with fresh water in order to remove any curing solution from the surface of the particles. Then, the particles were allowed to drip on a vibrating sieve or in a centrifuge or similar. Thereafter the particles were cooled or frozen for storing before they are further processed.

### Example 9A: Scallop analogue a)

The general process was followed, wherein step 2, an internal temperature of about 90 °C was reached within 10 min.

Thereafter the emulsion was added portion wise to an aqueous solution of calcium chloride (3% of CaCl₂×2H₂O) so that scallop-like shapes were formed. The suspension of shaped solidified mass particles was kept at 2-10 °C for 12 hours. Then the solidified mass shapes were separated from the solution, rinsed with water, and dried in a centrifuge.

A solution of Natural Scallop aroma in water was prepared, and the scallop-like solidified mass particles were added. The resulting suspension was kept at 5°C overnight, the solution separated from the particles, and the particle shapes were dried and frozen for one hour. Once the shapes had reached room temperature again, they were predusted, battered, breaded and baked in a conventional oven for 8 min at ≥72°C.

### Example 9B: Clam analogue

The general process was followed, wherein step 2, an internal temperature of about 90 °C was reached within 10 min.

Once the emulsion had cooled to room temperature, it was extruded into an aqueous solution of calcium chloride (3% of CaCl₂×2H₂O) so that clam-like strips were formed. The suspension of shaped particles was kept at 2-10 °C for 12 hours. Then the solidified particles were separated from the solution, rinsed with water, dried in a centrifuge, and cut into clam-like shapes.

A solution of Natural Clam aroma in water was prepared, and the clam-like solidified shapes were added. The resulting suspension was kept at 5°C overnight, the solution separated from the particles, and the particle shapes were dried and frozen for one hour. Once the shapes had reached room temperature again, they were predusted, battered, breaded and baked in a conventional oven for 5 min at ≥72°C.

### Example 9C: Calamari analogue

The general process was followed, wherein step 2, an internal temperature of about 90 °C was reached within 10 min

Once the emulsion had cooled to room temperature, it was poured into an aqueous solution of calcium chloride (3% of CaCl₂×2H₂O) so that oval-shaped blobs of 10-13 cm length were formed. The suspension of shaped mass particles was kept at 2-10 °C for 12 hours. Then the solidified mass shapes were separated from the solution, rinsed with water, dried in a centrifuge, and cut longitudinally into calamari-like strips.

A solution of Natural Calamari aroma in water was prepared, and the calamari-like solidified shapes were added. The resulting suspension was kept at 5°C overnight, the solution separated from the particles, and the particle shapes were dried and frozen for one hour. Once the shapes had reached room temperature again, they were predusted, battered, breaded and baked in a conventional oven for 5.5 min at ≥72°C.

### Example 9D: Popcorn Shrimp analogue

The general process was followed, wherein step 2, an internal temperature of about 90 °C was reached within 10 min.

Once the emulsion had cooled to room temperature, it was extruded into an aqueous solution of calcium chloride (3% of CaCl₂×2H₂O) so that long strands were formed. The suspension of shaped mass particles was kept at 2-10 °C overnight. Then the solidified shaped particles were separated from the solution, rinsed with water, dried in a centrifuge, and cut into smaller shrimp-like pieces.

A solution of Natural Popcorn Shrimp aroma in water was prepared, and the shrimp-like solidified shapes were added. The resulting suspension was kept at 5°C overnight, the solution separated from the particle shapes, and the shapes were dried and frozen for one hour. Once the shapes had reached room temperature again, they were predusted, battered, breaded and baked in a conventional oven for 8 min at ≥72°C.

### Example 9E: Texture analysis

Besides the standard recipe mentioned under Example 9, different concentrations of protein and alginate were used in the production of solidified mass to measure consistencies of seafood imitations compared to genuine seafood, especially small popcorn shrimp.

**Tab. 16:**

| **Ingredient [%]** | **2/3 × dry matter of basic shrimp** | **Basic shrimp imitate** | **4/3 × dry matter of basic shrimp** | **5/3 × dry matter of basic shrimp** |
|---|---|---|---|---|
| | **A** | **B** | **C** | **D** |
| pea protein isolate | 3.2 | 4.8 | 6.4 | 8.0 |
| sodium alginate | 0.7 | 1.0 | 1.4 | 1.7 |
| citrus fiber | 0.1 | 0.2 | 0.2 | 0.3 |
| canola oil | 10.0 | 10.0 | 10.0 | 10.0 |
| Water | 86.0 | 84.0 | 82.0 | 80.0 |

The samples were measured with the TA.XT plus Texture Analyzer equipped with a 30 kg load cell with the TA-42 (knife with 45° chisel end). The settings for the project were compression test mode, 2.0 mm/second for test speed, and the strain was set to 90%.

**Tab. 16: Average firmness (g) for cooked shrimp and uncooked solidified particle mass product**

| Firmness (g) | Shrimp | A | B | C | D |
|---|---|---|---|---|---|
| Average (g) | 743 | 463 | 884 | 862 | 1334 |
| St. Dev. (±) | 260 | 89 | 174 | 106 | 477 |

**Tab. 17: Average work of shear (g.sec) for cooked shrimp and uncooked solidified particle mass product**

| | Shrimp | A | B | C | D |
|---|---|---|---|---|---|
| Average (g.sec) | 1483 | 876 | 1786 | 1847 | 3533 |
| St. Dev. (±) | 510 | 186 | 373 | 441 | 1051 |

Under the aforementioned standard settings the parameters firmness (g) and work of shear (g.sec) as shown in Tab. 16 and 17 were measured. Compared to genuine small popcorn shrimp the recipe with 4.8% PPI and 1.0% alginate came closest.

In a parallel sensorial evaluation despite slight differences, the overall assessment by the panel was that the vegan popcorn shrimp substitutes with 6.4% PPI and 1.4% Alginate were overall rated as most comparable to the genuine popcorn shrimp.

### Example 10: Scallop analogue b) with internal setting

To a mixture of 74.0% of water, 6.4% of pea protein isolate, 1.4% of sodium alginate and 0.2% of citrus fiber, 1.7% scallop aroma, 10% canola oil and 6.3% coated calcium lactate were added.

This mixture was thoroughly stirred for 10 min at a temperature of 20°C. The obtained emulsion was filled into collagen casings (nominal diameter: 43 mm), sealed and heated in a convection oven at a temperature of 72°C for 10 minutes. Thereafter, the casings were stored under dry and cold conditions at 5 °C for 3 hours. Thereby, hardening was completed in a time-delayed hardening manner as the calcium ions contained in the coated calcium salt particles dissolve, as the coating had been removed by the temperature applied in the heating step.

The sausage-like solidified mass was portioned in slices of approximately 1.5 -2cm thickness and added to a solution of Natural Scallop aroma in water. Particles were stored in the flavor solution at 2°C overnight. Scallop imitations were removed, dried and compared to natural scallops obtained from a local fishmonger.

In a connected sensorial evaluation, produced vegan scallop imitations as well as natural counterparts, were battered and deep fried. It was surprisingly observed during a triangle test that the majority of panelist were not able to differentiate between the vegan scallop substitute and the natural scallop.

## Claims

1. A seafood substitute product which is a solidified mass comprising
a) a protein material derived from plants in an amount from about 3 wt% to about 15 wt%
b) an amount of alginate from about 0.5 wt% to about 2.8 wt%
c) an amount of vegetable oil from about 4 wt% to about 20 wt%
d) an amount of water of at least 60 wt%.
e) an amount of calcium ions between 0.1 and 0.7 wt%

2. The seafood substitute product according to claim 1, wherein the product substantially resembles the shape of scallop, shrimp, clam or calamari, as used by consumers.

3. The seafood substitute product according to any of the preceding claims, wherein ratio of protein to alginate is 20-3 to 1, preferably 15-4 to 1.

4. The seafood substitute product according to any of the preceding claims, the mass comprising one or more of items (a) through (f):
a) a protein material derived from plants in an amount from about 4 wt% to about 13 wt%, preferably from about 6 wt% to about 12 wt%;
b) an amount of alginate from about 1 wt% to about 2.4 wt%;
c) an amount of vegetable oil from about 4 wt% to about 15 wt%;
d) an amount of water of about 65 wt% or more, preferably of about 70 wt% or more;
e) an amount of calcium ions between about 0.2 and about 0.6 wt%;
f) optionally an amount of hydrocolloid or other polysaccharide of about 10 wt% or less, preferably 0.5-5 wt%

5. The seafood substitute product according to any one of the preceding claims, wherein the product has a firmness of
a) about 600-900 g for scallop substitute measured as 2 cm high and 2.5-5.0 cm diameter solidified mass
b) about 1500-2500 g for shrimp substitute measured as a string of 5-10cm length with a diameter of 1 cm solidified mass; about 700-1500 g for small popcorn shrimp measured as a string of 1-5 cm length with a diameter of 1.5 cm solidified mass;
c) about 800-1800 g for calamari substitute measured as a strip of 10-12 cm length with a diameter of 2 cm solidified mass
d) about 800-1800 g for clam substitute measured as a string of 10 cm high and 1 cm diameter solidified mass
as measured with a Texture Analyzer.

6. The seafood substitute product of any one of the preceding claims, wherein the protein is selected from the group consisting of pulses, cereals, oil seeds, plant leaves, preferably from one or more of pea protein, faba bean protein, soy protein, lentil protein, lupine protein, chickpea protein, mung bean protein, potato protein, rice protein, wheat protein, sunflower protein, hemp protein, rapeseed / canola protein, proteins of spinach leaves, water lentil leaves, alfalfa leaves, sugar beet leaves, algal protein, bacterial protein, fungal protein, yeast protein, and combinations thereof.

7. The seafood substitute product of any one of the preceding claims, wherein the oil is a triglyceride plant or algae oil, preferably corn oil, palm oil, rapeseed oil, canola oil, sunflower oil, soybean oil, coconut oil, or combinations thereof, preferably wherein the oil is canola oil, rape seed oil or sunflower oil or a combination thereof.

8. The seafood substitute wherein the product further comprises a neutral polysaccharide, preferably one or more of modified or native starch, Methyl cellulose and Xanthan gum.

9. The seafood substitute product of any one of the preceding claims, further comprising at least one of flavoring and coloring, to mimic natural seafood.

10. The seafood substitute product according to any one of the preceding claims, wherein the substitute seafood product resembles scallop in shape, taste and hardness.

11. A method for providing a seafood substitute, the method comprising:
a) mixing of components comprising:
i) a protein material derived from plants in an amount from about 3 wt% to about 15 wt%
ii) an amount of alginate from about 0.5 wt% to about 2.8 wt%
iii) an amount of vegetable oil from about 4 wt% to about 20 wt%
iv) an amount of water of at least 60 wt%.
b) optionally heating, the mixture to provide an emulsion
c) shaping the emulsion into a shape to provide a shaped mass and allowing the shaped mass to solidify with calcium ions.

12. The method of any one of claims 11, where the shaped mass is solidified by application of calcium ions using internal setting, diffusion setting or combined setting.

13. The method of any one claims 11-12, where the shaped mass is solidified by internal setting, by delayed release of a calcium source comprised in the shaped mass to react with alginate.

14. The method of a seafood substitute of any one of claims 11-13 where one or a combination of the following shaping technologies is applied: molding, filling in casings, cutting, slicing, droplet forming, extrusion, shedding, sheeting, or a combination thereof.

15. The method according to any one of claims 11-14, wherein an amount of hydrocolloid or other polysaccharide of about 10 wt% or less, preferably 0.5-5 wt% is mixed with step (a), and wherein the emulsion has a viscosity of between 14-25 Pa.s as measured by a RVA, preferably 25 Pa.s or more at the processing temperature of 5-20°C, preferably 5-10°C.

16. The method according to any one of claims 11-15, wherein the process is implemented in such a way that a processing time of between 20 min and 1 hr is available before substantial hardening of the mass.
